# EUROPEAN PATENT SPECIFICATION

(11) **EP 3 696 428 B1**
(45) Date of publication and mention of the grant of the patent: **26.06.2024**
(21) Application number: 20156167.7
(22) Date of filing: 07.02.2020
(51) Int. Cl.: F16B 21/08, F16B 21/07, F16B 5/06, F16B 2/24

(54) **FASTENER CLIP WITH STABILIZING SHOULDER TABS**
BEFESTIGUNGSKLAMMER MIT STABILISIERENDEN SCHULTERLASCHEN
ATTACHE DE FIXATION COMPORTANT DES PATTES D'ÉPAULE STABILISATRICES

(30) Priority: 12.02.2019 US 201962804321 P; 09.01.2020 US 202016739111
(43) Date of publication of application: 19.08.2020
(73) Proprietor: Termax LLC, Lake Zurich, Il 60047 (US)
(72) Inventor: Dickinson, Daniel James, Lincolnshire, IL Illinois 60069 (US)
(74) Representative: BRP Renaud & Partner mbB Rechtsanwälte Patentanwälte Steuerberater

(56) References cited:
- WO-A1-2010/104653
- WO-A1-2017/164967
- US-A1- 2006 254 032
- US-A1- 2013 340 216

## Description

### A. Background

The invention relates generally to devices for fastening objects, and more particularly to a fastener clip assembly for insertion into an engagement structure, such as a vehicle chassis, a hollow substrate, a wall, a plate, or any suitable surface.

A number of devices and fasteners are currently available for fastening panels, such as body panels and automobile interior trim piece panels, to the chassis of a vehicle. As used herein, a body panel refers to, for example, any interior or exterior body panel on a vehicle, a plastic interior trim piece, door panel, headliner or any interior trim piece. Additionally, the panel may be any suitable exterior body panel, such as a fender, bumper, quarter panel or door panel. The chassis of the vehicle may include any substrate, plate, body panel, structural framework, chassis component or subcomponent, wall or any suitable object.

US 2006/254032 A1 discloses a fastener to removably mount an object in a mounting aperture of a panel. The fastener includes a body having two opposing side members and defining a second aperture configured to accept at least a portion of the object. The fastener includes further at least one elastic abutting flange, a corrosion resistant coating, and a silencer plating overlying the corrosion resistant coating.

US 2013/340216A1 discloses a fastener with a U-shaped structure. At least one barb extends from the bottom of the fastener. The fastener reversibly engages the rib of a first part, such as a plastic panel and/or a pillar, and the fastener is also suitable to be engaged reversibly in a slot of second part, such as a metal sheet and/or the frame of a car.

WO 2017/164967 A1 discloses a fastening clip which is configured to securely couple a first component to a second component. The fastening clip includes a first frame connected to an opposed second frame, wherein each of the first and second frames includes an exterior contact finger, an interior contact finger, and a contact prong.

These conventional fastener devices provide approximately relatively equal levels of insertion and extraction force. These body panels often attach to the chassis of an automobile with a relatively high level of insertion force while providing a relatively low level of extraction force.

Fastener clips, such as two-piece fasteners (multi-piece), are known for attaching body panels to an automobile chassis. Two-piece fasteners are used so that if the panels are removed after original installation, such as to service the components in the door, they may be pulled apart so that one portion remains attached to the sheet metal while the other remains attached to the trim panel. The two pieces may also be reattached after separation. However, two-piece fasteners require manufacturing of multiple pieces and labor-intensive assembly of the two pieces and thus are relatively expensive.

One-piece fasteners are typically less expensive than two or multi piece fasteners. One-piece fasteners have a base to attach to a body panel and a post attached to the base and wings attached at least to the top of the post at a tip of the fastener for fastening to a frame slot. However, if the frame slot and the fastener are misaligned then the forces on the wings are unequal since the wing closest to the slot edge will experience higher wing compression while the other wing will have insufficient springing force to engage the slot. As the clip is forced into the slot, such high forces on one wing may cause the wing to break off thus rendering the fastener incapable of fastening the body panel to the frame. Worse, the broken, damaged or weakened wing can cause detachment of the body panel or contribute to rattles.

The wings of conventional fasteners have a sharp, unsmooth groove to engage the edge of the frame slot. When the clip is removed however, the sharp edges of the frame slot cut into the softer plastic and cut the groove. During manufacture, the slots are typically formed in the frame of the vehicle, such as in an inner roof or door sheet metal structure, by punching the sheet metal. As the punch enters the sheet metal, the outer part of the sheet metal is pushed toward the inside and a metal puncture or ridge is formed on the inside of the sheet metal. The resulting slot edge on the outer part of the slot is relatively smooth; however, the inner part of the slot edge is sharp and rough. Upon removal of the fastener clip, the sharp edges of the frame cut off the groove so that the clip may not be reinserted and reusable.

If the slot is off-center or if the sheet metal varies in thickness or if tolerances in production of the slot in the vehicle chassis or in the trim-piece exist, for example, then engagement of one portion of the hole in the chassis with one of the wings may not provide suitable frictional engagement. Twisting of the body panel will be likely more prevalent because less than all contact points are actually made with the slot of the vehicle chassis. As a result, conventional single piece fasteners do not self-align themselves when the fastener and the body panel are misaligned and are prone to wing breakage such that the fastener cannot be re-attached.

Conventional fasteners typically do not adequately secure the panel to the vehicle chassis having variations in slot size and location or sheet metal with different curvature or thicknesses throughout. Conventional single piece fasteners do not self-align themselves when the fastener and the body panel are misaligned and are prone to wing breakage such that the fastener cannot be re-attached. Also, conventional fasteners are not suitable when subjected to a variety of environmental conditions, such as in the presence of vibration at various levels of amplitude and frequency. For example, conventional fasteners of this type typically do not prevent or minimize the amount of buzzing, rattling or any other type of noise that may cause attention to the occupants of the vehicle or otherwise weaken the attachment. Conventional fasteners do not adequately accommodate various levels of production tolerances, such as various dimensions amongst, for example, the body panels as well as the vehicle chassis. Thus, conventional fastener devices typically do not self-align nor adequately fasten to a range of sheet metal thicknesses and do not minimize or eliminate buzzing and rattling and do not sufficiently accommodate variations in production tolerances. As a result, wear, squeaks, rattles, buzzing, corrosion and loss of elasticity and loss of sealing may result, especially after years of vehicle operation and exposure to vibration, heat, humidity, and other environmental conditions. The invention is a fastener clip system according to claim 1.

### B. Brief Description of the Drawings

Other objects and advantages of the invention may become apparent upon reading the detailed description and upon reference to the accompanying drawings.
Figure 1 is a perspective view of a fastener clip, in accordance with some embodiments.
Figure 2 is another perspective view of a fastener clip, in accordance with some embodiments.
Figure 3 is a side view of a fastener clip, in accordance with some embodiments.
Figure 4 is another side view of a fastener clip, in accordance with some embodiments.
Figure 5 is a perspective view of a fastener clip attached to a blade, in accordance with some embodiments.
Figure 6 is a side view of a fastener clip attached to a blade, in accordance with some embodiments.
Figure 7 is another side view of a fastener clip attached to a blade, in accordance with some embodiments.
Figure 8 is an assembled view of a fastener clip assembly, in accordance with some embodiments.
Figure 9 is another assembled view of a fastener clip assembly, in accordance with some embodiments.

While the invention is subject to various modifications and alternative forms, specific embodiments thereof are shown by way of example in the drawings and the accompanying detailed description. It should be understood, however, that the drawings and detailed description are not intended to limit the invention to the particular embodiments. This disclosure is instead intended to cover all modifications, equivalents, and alternatives falling within the scope of the present invention as defined by the appended claims.

### C. Detailed Description

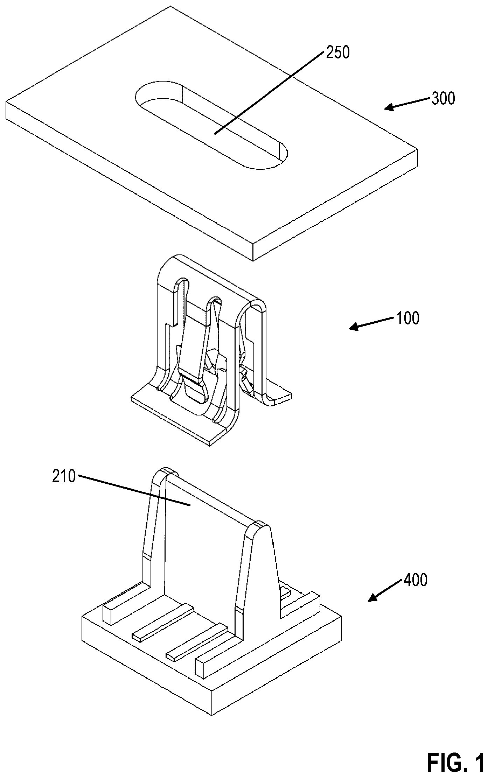

Figure 1 is a perspective view of a fastener clip, in accordance with some embodiments.

In some embodiments, fastener clip 100 is configured to fasten together top surface 300 and bottom surface 400. Blade 210, which extends from and is coupled to surface 400, is configured to receive and be coupled to fastener clip 100. In some embodiments, blade 210 may be molded onto surface 400. In other embodiments, blade 210 may be attached to surface 400 using various other means.

In some embodiments, fastener clip 100 may also be configured to be inserted through slot 250 of top surface 300 and to secure itself to the top surface 300. As such, in some embodiments, the fastener clip assembly is configured to fasten together top surface 300 and bottom surface 400.

In some embodiments, surface 400 may be part of a body panel and surface 300 may be part of the chassis of an automobile frame. Accordingly, the fastener clip assembly may be configured to fasten together a panel to the frame of an automobile.

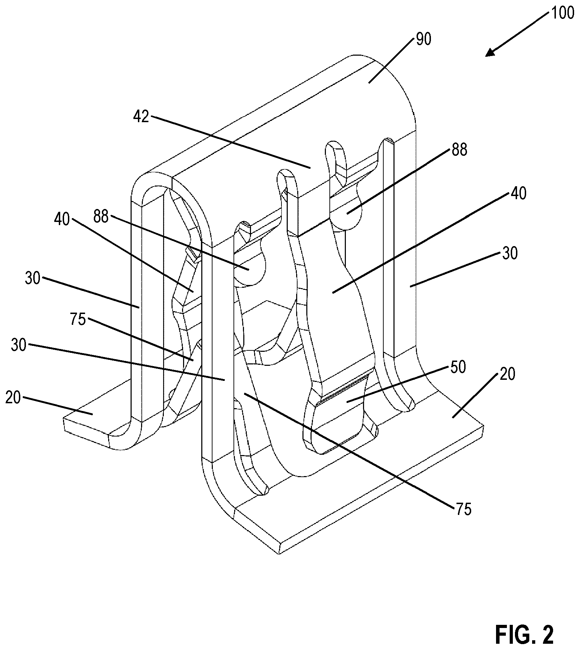

Figure 2 is another perspective view of a fastener clip, in accordance with some embodiments.

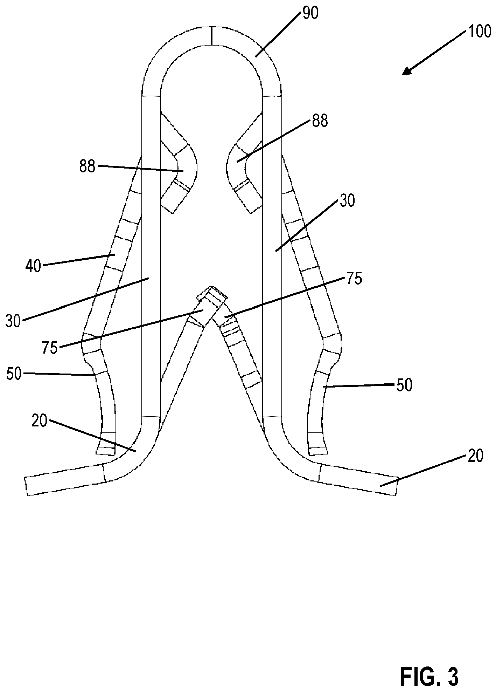

Figure 3 is a side view of a fastener clip, in accordance with some embodiments.

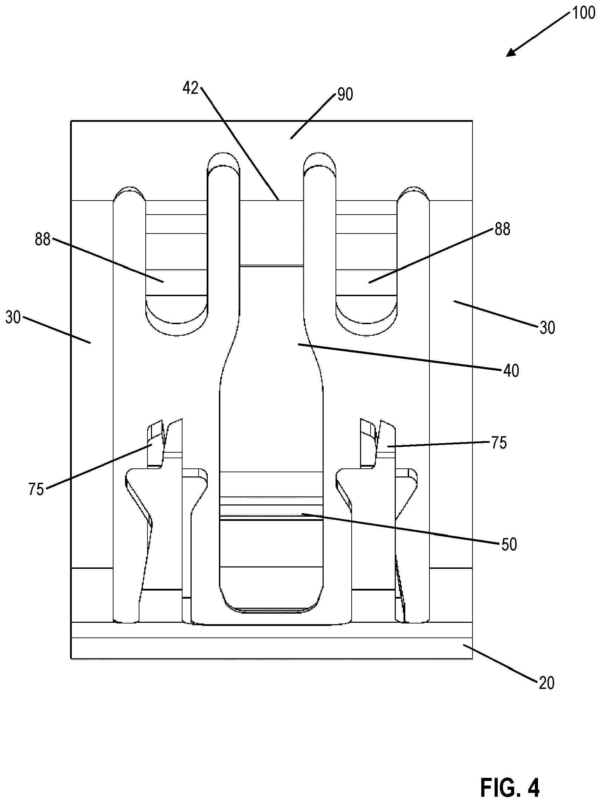

Figure 4 is another side view of a fastener clip, in accordance with some embodiments.

Fastener clip 100 includes first and second feet 20 and a first and second pair of laterally offset legs 30 extending respectively from first and second feet 20. In some embodiments, feet 20 are configured to provide a stopping point for fastener clip 100 when fastener clip 100 is being inserted into a slot.

In some embodiments, first and second pairs of laterally offset legs 30 are connected at the top of fastener clip 100 by top portion 90.

In some embodiments, top portion 90 may be configured to guide fastener clip 100 into a slot based at least upon having a curved surface. For example, top portion 90 may be sloped downward toward the two sides of fastener clip 100 such that fastener clip may be more easily inserted into a corresponding slot in one of the surfaces that is to be fastened.

In some embodiments, two laterally offset wings 40 extend downward from opposite sides of top portion 90. Wings 40 have an engagement region 50 that's configured to engage a slot and couple fastener clip 40 to the slot.

Although reference number 30 refers to both pairs of legs and reference number 40 refers to wings 40 on both pairs of legs 30, it is understood that the at least one first wing 40 corresponds to the first pair of legs 30 and the at least one second wing 40 corresponds to the second pair of legs 30.

Although the fastener clip 100 is shown with four legs 30 and two wings 40, any suitable number of legs 30 may be used. For example, two legs 30 and two wings 40 may be used, three legs 30, four legs 30, etc. may be used. According to one embodiment, the legs 30 may have any suitable shape, such as for example, the legs are tapered, straight, curved, or any suitable shape.

In some embodiments, the wings 40 have a size, such as a width, length, thickness and a pivot point 42 to provide very high extraction force levels while the insertion force level is relatively very low. For example, the pivot point 42 may be weakened by scoring, stamping, bending or cutting, or any suitable means on wing 40 to ensure that the wings 40 spring inward as required so that the insertion force is low relative to the extraction force. Since the wings 40 are in compression during extraction, the weakened pivot point 42 does not significantly weaken the extraction force yet the insertion force is reduced. Additionally, the width of the wing 40 may be increased to further increase the strength of the wing and thus increase the extraction force, as well as increase the size of the engagement region. Alternatively, the width of the wing may be decreased, or the wings may have different widths and engagement regions 50 to achieve any desired insertion force, extraction force or ratio.

According to the invention the fastener clip system comprises at least a pair of barbs (75) extending from the pair of feet (20). The barbs 75 are configured to secure fastener clip 100 on blade 210. In some embodiments, barbs 75 are bent towards the inside of the fastener clip. By inserting the fastener clip over the blade, the barbs bend backwards and "dig" into the blade to prevent the fastener clip from being removed from the blade.

According to the invention two pair of stabilizing shoulder tabs 88 are configured to guide fastener clip 100 over a blade, to which the clip is to attach, as the fastener clip is being inserted over the blade. As such, stabilizing shoulder tabs 88 are configured to prevent excessive turning or excessive movement of the clip, for example, as the clip is being inserted over the blade. Excessive turning or otherwise excessive and unnecessary movement may prevent the clip from being inserted, and in addition, may damage the clip, the blade, or both.

Stabilizing shoulder tabs 88 may also be configured to provide additional stability between the blade and fastener clip 100 after installation. For example, by pressing against the top of the blade, stabilizing shoulder tabs 88 are configured to prevent excessive relative side-to-side motion between the clip and the blade. And in situations where fastener clip 100 may move side-to-side to the blade, causing a temporary bending of shoulder stabilizing tabs 88, the stabilizing tabs 88 are configured to bend back, restoring the original relative position of the clip and the blade.

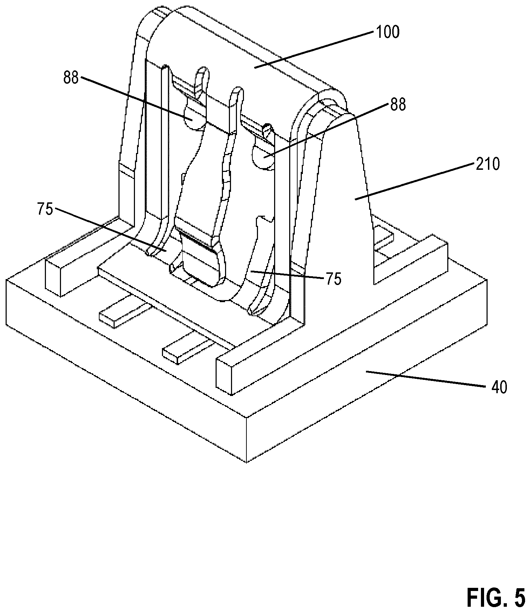

Figure 5 is a perspective view of a fastener clip attached to a blade, in accordance with some embodiments.

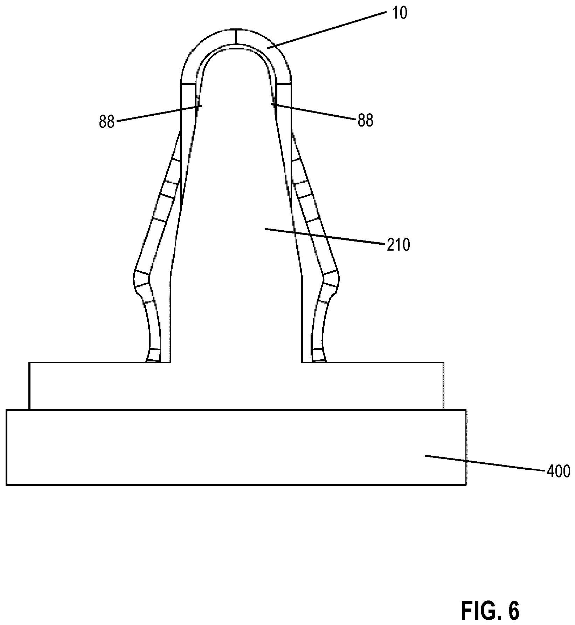

Figure 6 is a side view of a fastener clip attached to a blade, in accordance with some embodiments.

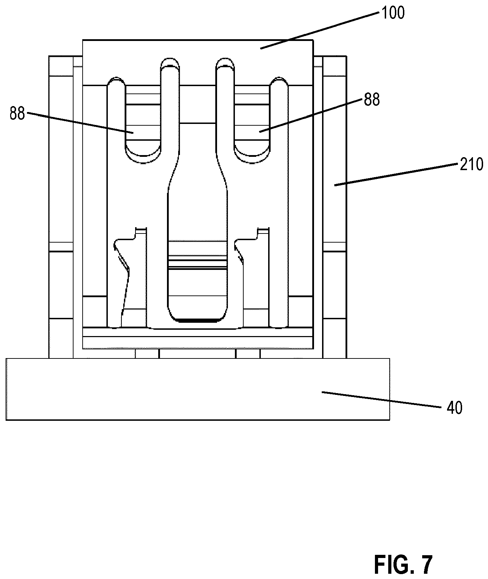

Figure 7 is another side view of a fastener clip attached to a blade, in accordance with some embodiments.

Fastener clip 100 is configured to fit over and attach to blade 210. Blade 210 may be either attached to or be part of surface 400. For example, blade 210 may be molded as part of surface 400 (which, in some embodiments, may be an automobile panel). According to the invention the stabilizing shoulder tabs 88 are configured to guide blade 210 into fastener clip 100 as the fastener clip is inserted over the blade. In addition, stabilizing shoulder tabs 88 are configured to provide additional stability between blade 210 and fastener clip 100 after installation. For example, by pressing against blade 210, stabilizing shoulder tabs 88 are configured to prevent excessive relative motion between the clip and the blade. And in situations where fastener clip 88 may move relative to blade 210, causing a slide bending of shoulder stabilizing tabs 88, the tabs are configured to bend back restoring the relative position of the clip and the blade to its original configuration.

In some embodiments, barbs 75 (four, in some embodiments) are configured to bend back as the clip slides onto the blade and "dig" into the blade to prevent removal of clip 100 from blade 210.

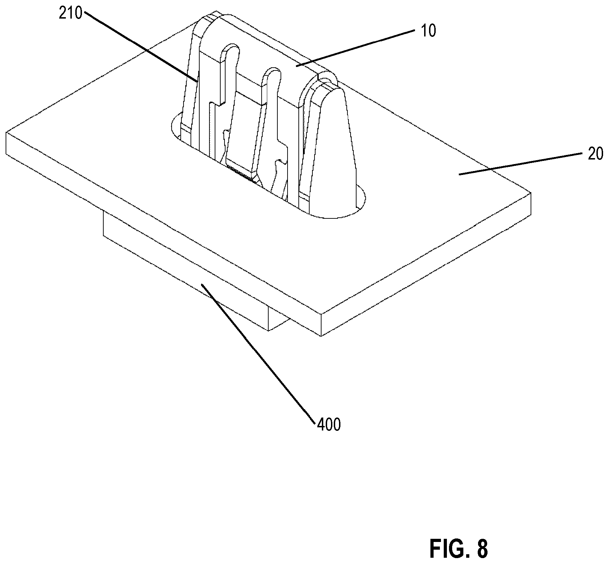

Figure 8 is an assembled view of a fastener clip assembly, in accordance with some embodiments.

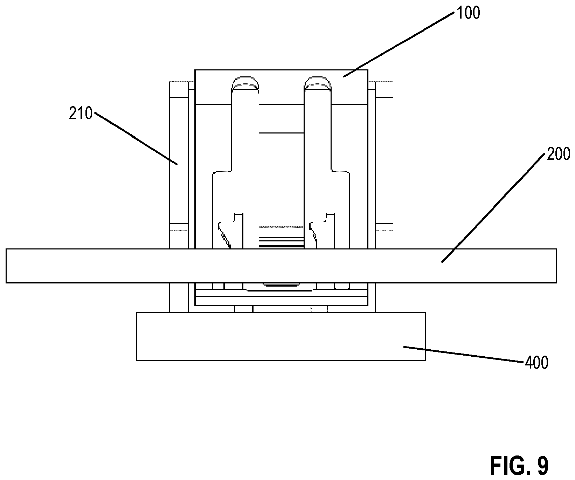

Figure 9 is another assembled view of a fastener clip assembly, in accordance with some embodiments.

Fastener clip 100 is configured to join together two surfaces such as surfaces 300 and 400. Fastener clip 100 is configured to fit over and attach to blade 210 that is attached to surface 400, and in addition fastener clip 100 is configured to removably attach to the slot in surface 200. For example, the fastener clip system may be used to fasten together a body panel to the chassis of an automobile.

It is understood that the implementation of other variations and modifications of the present invention in its various aspects will be apparent to those of ordinary skill in the art and that the invention is not limited by the specific embodiments described.

One or more embodiments of the invention are described above. It should be noted that these and any other embodiments are exemplary and are intended to be illustrative of the invention rather than limiting. While the invention is widely applicable to various types of systems, a skilled person will recognize that it is impossible to include all of the possible embodiments and contexts of the invention in this disclosure. Upon reading this disclosure, many alternative embodiments of the present invention will be apparent to persons of ordinary skill in the art.

The benefits and advantages that may be provided by the present invention have been described above with regard to specific embodiments. As used herein, the terms "comprises," "comprising," or any other variations thereof, are intended to be interpreted as non-exclusively including the elements or limitations that follow those terms. Accordingly, a system, method, or other embodiment that comprises a set of elements is not limited to only those elements and may include other elements not expressly listed or inherent to the claimed embodiment.

While the present invention has been described with reference to particular embodiments, it should be understood that the embodiments are illustrative and that the scope of the invention is not limited to these embodiments. Many variations, modifications, additions and improvements to the embodiments described above are possible. It is contemplated that these variations, modifications, additions and improvements fall within the scope of the invention as detailed within the following claims.

## Claims

1. A fastener clip system comprising:
a fastener clip (100),
wherein the fastener clip (100) is configured to attach over a blade (210) on a panel, and
wherein the fastener clip (100) is configured to be removably coupled to a slot in a chassis,
the fastener clip (100) comprising:
at least a pair of legs (30) extending from a top portion (90) of the fastener clip (100);
at least a pair of feet (20) attached to the pair of legs (30) adjacent the top portion (90);
a pair of wings (40) originating from the top portion (90), wherein the pair of wings (40) is configured to facilitate the removable engagement of the fastener clip (100) to the slot in the chassis;
at least a pair of barbs (75) extending from the pair of feet (20), wherein the barbs (75) are configured to dig into and secure the fastener clip (100) to the blade (210);
**characterized in that**
the fastener clip (100) comprises two pairs of stabilizing shoulder tabs (88) originating from the top portion (90), wherein the pair of wings (40) is arranged between the two pairs of stabilizing shoulder tabs (88) and wherein each pair of shoulder tabs (88) is configured to guide the fastener clip (100) over the blade (210) based at least upon the fastener clip (100) being inserted over the blade (210).

2. The fastener clip system of claim 1, wherein the panel is configured to be coupled to the chassis based at least upon the fastener clip (100) being configured to attach over the blade (210) and the fastener clip (100) being configured to be removably coupled to the slot.

3. The fastener clip system of claim 1, wherein the pair of stabilizing shoulder tabs (88) is configured, based at least upon being bent by the blade (210) being off a preferred position, to bend back restoring the blade (210) to the preferred position.

4. The fastener clip system of claim 1, wherein the fastener clip (100) is constructed from at least one of: spring steel, carbon spring steel, full hard stainless steel, hard plastic.

5. The fastener clip system of claim 1, wherein the pair of stabilizing shoulder pads (88) extends inwards with respect to the fastening clip (100) toward the blade (210) and is configured to bend out in response to the fastening clip (100) being inserted over the blade (210).

6. The fastener clip system of claim 1, wherein the pair of wings (40) is configured to bend as the fastener clip (100) is being inserted into the slot and to bend back over the slot securing the fastener clip (100) to the chassis.

7. A fastener assembly comprising:
a body panel comprising a blade (210) coupled to the body panel;
a chassis comprising a slot;
and a fastener clip (100) of the fastener clip system according to claim 1.

8. The fastener assembly of claim 7, wherein the panel is configured to be coupled to the chassis based at least upon the fastener clip (100) being configured to attach over the blade (210) and the fastener clip (100) being configured to be removably coupled to the slot.

9. The fastener assembly of claim 7, wherein the pair of stabilizing shoulder tabs (88) is configured, based at least upon being bent by the blade (210) being off a preferred position, to bend back restoring the blade (210) to the preferred position.

10. The fastener assembly of claim 7, wherein the fastener clip (100) is constructed from at least one of: spring steel, carbon spring steel, full hard stainless steel, hard plastic.

11. The fastener assembly of claim 7, wherein the pair of stabilizing shoulder pads extends inwards with respect to the fastening clip (100) toward the blade (210) and is configured to bend out in response to the fastening clip (100) being inserted over the blade (210).

12. The fastener assembly of claim 7, wherein the pair of wings (40) is configured to bend as the fastener clip (100) is being inserted into the slot and to bend back over the slot securing the fastener clip (100) to the chassis.

## Patentansprüche

1. Befestigungsklammersystem, das Folgendes umfasst:
eine Befestigungsklammer (100),
wobei die Befestigungsklammer (100) so konfiguriert ist, dass sie über eine Klinge (210) an einer Platte angebracht werden kann, und
wobei die Befestigungsklammer (100) so konfiguriert ist, dass sie abnehmbar mit einem Schlitz in einem Chassis verbunden werden kann,
die Befestigungsklammer (100) umfasst:
mindestens ein Paar von Beinen (30), die sich von einem oberen Teil (90) der Befestigungsklammer (100) aus erstrecken;
mindestens ein Paar von Füßen (20), die an dem Paar der Beine (30) neben dem oberen Teil (90) befestigt sind;
ein Paar von Flügeln (40), die von dem oberen Teil (90) ausgehen, wobei das Paar der Flügel (40) so konfiguriert ist, dass es den lösbaren Eingriff der Befestigungsklammer (100) in den Schlitz in dem Chassis erleichtert;
mindestens ein Paar von Widerhaken (75), die sich von dem Paar der Füße (20) erstrecken, wobei die Widerhaken (75) so konfiguriert sind, dass sie sich in die Befestigungsklammer (100) eingraben und sie an der Klinge (210) befestigen;
**dadurch gekennzeichnet, dass**
die Befestigungsklammer (100) zwei Paare von stabilisierenden Schulterlaschen (88) umfasst, die von dem oberen Abschnitt (90) ausgehen, wobei das Paar der Flügel (40) zwischen den zwei Paaren der stabilisierenden Schulterlaschen (88) angeordnet ist und wobei jedes Paar der Schulterlaschen (88) so konfiguriert ist, dass es die Befestigungsklammer (100) über die Klinge (210) führt, zumindest auf der Grundlage, dass die Befestigungsklammer (100) über die Klinge (210) eingeführt wird.

2. Befestigungsklammersystem nach Anspruch 1, wobei die Platte so konfiguriert ist, dass sie mit dem Chassis gekoppelt wird, und zwar zumindest auf der Grundlage, dass die Befestigungsklammer (100) so konfiguriert ist, dass sie über der Klinge (210) angebracht wird, und dass die Befestigungsklammer (100) so konfiguriert ist, dass sie abnehmbar mit dem Schlitz gekoppelt wird.

3. Befestigungsklammersystem nach Anspruch 1, wobei das Paar der stabilisierenden Schulterlaschen (88) so konfiguriert ist, dass es sich zumindest dann, wenn es durch die Klinge (210) aus einer bevorzugten Position heraus gebogen wird, zurückbiegt, um die Klinge (210) in die bevorzugte Position zurückzubringen.

4. Befestigungsklammersystem nach Anspruch 1, wobei die Befestigungsklammer (100) aus mindestens einem der folgenden Werkstoffe hergestellt ist: Federstahl, Kohlenstoff-Federstahl, vollharter rostfreier Stahl, harter Kunststoff.

5. Befestigungsklammersystem nach Anspruch 1, wobei sich das Paar der stabilisierenden Schulterpolster (88) in Bezug auf die Befestigungsklammer (100) nach innen in Richtung der Klinge (210) erstreckt und so konfiguriert ist, dass es sich als Reaktion darauf, dass die Befestigungsklammer (100) über die Klinge (210) eingeführt wird, nach außen biegt.

6. Befestigungsklammersystem nach Anspruch 1, wobei das Paar der Flügel (40) so konfiguriert ist, dass es sich biegt, wenn die Befestigungsklammer (100) in den Schlitz eingeführt wird, und sich über den Schlitz zurückbiegt, um die Befestigungsklammer (100) am Chassis zu sichern.

7. Befestigungsanordnung, die Folgendes umfasst:
eine Karosserieplatte, die ein mit der Karosserieplatte verbundene Klinge (210) umfasst;
ein Gehäuse mit einem Schlitz;
und eine Befestigungsklammer (100) des Befestigungsklammersystems nach Anspruch 1.

8. Befestigungsanordnung nach Anspruch 7, wobei die Platte so konfiguriert ist, dass sie mit dem Chassis gekoppelt wird, und zwar zumindest auf der Grundlage, dass die Befestigungsklammer (100) so konfiguriert ist, dass sie über der Klinge (210) angebracht wird, und dass die Befestigungsklammer (100) so konfiguriert ist, dass sie abnehmbar mit dem Schlitz gekoppelt wird.

9. Befestigungsanordnung nach Anspruch 7, wobei das Paar der stabilisierenden Schulterzungen (88) so konfiguriert ist, dass es sich zumindest dann, wenn es durch die Klinge (210) aus einer bevorzugten Position heraus gebogen wird, zurückbiegt und die Klinge (210) in die bevorzugte Position zurückbringt.

10. Befestigungsanordnung nach Anspruch 7, wobei die Befestigungsklammer (100) aus mindestens einem der folgenden Werkstoffe hergestellt ist: Federstahl, Kohlenstoff-Federstahl, vollharter rostfreier Stahl, harter Kunststoff.

11. Befestigungsanordnung nach Anspruch 7, wobei sich das Paar der stabilisierenden Schulterpolster in Bezug auf die Befestigungsklammer (100) nach innen in Richtung der Klinge (210) erstreckt und so konfiguriert ist, dass es sich als Reaktion darauf, dass die Befestigungsklammer (100) über die Klinge (210) eingeführt wird, nach außen biegt.

12. Befestigungsanordnung nach Anspruch 7, wobei das Paar der Flügel (40) so konfiguriert ist, dass es sich biegt, wenn die Befestigungsklammer (100) in den Schlitz eingeführt wird, und sich über den Schlitz zurückbiegt, um die Befestigungsklammer (100) am Chassis zu sichern.

## Revendications

1. Un système de clip de fixation comprenant :
un clip de fixation (100),
dans lequel le clip de fixation (100) est configuré pour se fixer sur une lame (210) d'un panneau, et
dans lequel le clip de fixation (100) est configuré pour être couplé de manière amovible à une fente dans un châssis,
le clip de fixation (100) comprenant :
au moins une paire de pattes (30) s'étendant à partir d'une partie supérieure (90) du clip de fixation (100) ;
au moins une paire de pieds (20) fixée à la paire de jambes (30) adjacente à la partie supérieure (90) ;
une paire d'ailes (40) partant de la partie supérieure (90), la paire d'ailes (40) étant configurée pour faciliter l'engagement amovible du clip de fixation (100) dans la fente du châssis ;
au moins une paire de barbes (75) s'étendant à partir de la paire de pieds (20), les barbes (75) étant configurées pour s'enfoncer dans le clip de fixation (100) et le fixer à la lame (210) ;
**caractérisé par le fait que**
le clip de fixation (100) comprend deux paires de pattes d'épaule stabilisatrices (88) partant de la partie supérieure (90), la paire d'ailes (40) étant disposée entre les deux paires de pattes d'épaule stabilisatrices (88) et chaque paire de pattes d'épaule (88) étant configurée pour guider le clip de fixation (100) sur la lame (210) au moins lors de l'insertion du clip de fixation (100) sur la lame (210).

2. Le système de clip de fixation de la revendication 1, dans lequel le panneau est configuré pour être couplé au châssis, au moins parce que le clip de fixation (100) est configuré pour se fixer sur la lame (210) et que le clip de fixation (100) est configuré pour être couplé de manière amovible à la fente.

3. Le système de clip de fixation de la revendication 1, dans lequel la paire de pattes d'épaule stabilisatrices (88) est configurée, au moins lorsqu'elle est pliée par la lame (210) qui n'est pas dans une position préférentielle, pour se plier à nouveau en ramenant la lame (210) dans la position préférentielle.

4. Le système de clip de fixation de la revendication 1, dans lequel le clip de fixation (100) est fabriqué à partir d'au moins l'un des matériaux suivants : acier à ressort, acier à ressort au carbone, acier inoxydable entièrement dur, plastique dur.

5. Le système de clip de fixation de la revendication 1, dans lequel la paire d'épaulettes stabilisatrices (88) s'étend vers l'intérieur du clip de fixation (100) en direction de la lame (210) et est configurée pour se plier en réponse à l'insertion du clip de fixation (100) sur la lame (210).

6. Le système de clip de fixation de la revendication 1, dans lequel la paire d'ailes (40) est configurée pour se plier lorsque le clip de fixation (100) est inséré dans la fente et pour se replier sur la fente afin de fixer le clip de fixation (100) au châssis.

7. Un assemblage d'attaches comprenant:
un panneau de carrosserie comprenant une lame (210) couplée au panneau de carrosserie ;
un châssis comprenant une fente ;
et un clip de fixation (100) du système de clip de fixation selon la revendication 1.

8. L'assemblage de fixation de la revendication 7, dans lequel le panneau est configuré pour être couplé au châssis, au moins parce que le clip de fixation (100) est configuré pour se fixer sur la lame (210) et que le clip de fixation (100) est configuré pour être couplé de manière amovible à la fente.

9. L'assemblage de fixation de la revendication 7, dans lequel la paire de pattes d'épaule stabilisatrices (88) est configurée, au moins lorsqu'elle est pliée par la lame (210) qui n'est pas dans une position préférentielle, pour se plier de nouveau en ramenant la lame (210) dans la position préférentielle.

10. L'assemblage de fixation de la revendication 7, dans lequel le clip de fixation (100) est fabriqué à partir d'au moins l'un des matériaux suivants : acier à ressort, acier à ressort au carbone, acier inoxydable entièrement dur, plastique dur.

11. L'assemblage de fixation de la revendication 7, dans lequel la paire d'épaulettes stabilisatrices s'étend vers l'intérieur du clip de fixation (100) en direction de la lame (210) et est configurée pour se plier en réponse à l'insertion du clip de fixation (100) sur la lame (210).

12. L'assemblage de fixation de la revendication 7, dans lequel la paire d'ailes (40) est configurée pour se plier lorsque le clip de fixation (100) est inséré dans la fente et pour se replier sur la fente afin de fixer le clip de fixation (100) au châssis.
